Europäisches Patentamt

European Patent Office

Office européen des brevets

(19)

(11) Veröffentlichungsnummer: **0 354 961**

**A1**

(12)
# EUROPÄISCHE PATENTANMELDUNG
veröffentlicht nach Art. 158 Abs. 3
EPÜ

(21) Anmeldenummer: 88904289.1

(22) Anmeldetag: 05.02.88

(86) Internationale Anmeldenummer:
PCT/SU88/00030

(87) Internationale Veröffentlichungsnummer:
WO 89/07280 (10.08.89 89/18)

(51) Int. Cl.⁴ **G02B 27/30 , F21V 5/00**

(43) Veröffentlichungstag der Anmeldung:
21.02.90 Patentblatt 90/08

(84) Benannte Vertragsstaaten:
DE FR GB IT NL SE

(71) Anmelder: **NAUCHNO-PROIZVODSTVENNOE OBIEDINENIE PO AVTOELEKTRONIKE I AVTOTRAKTORNOMU ELEKTROOBORUDOVANIJU**
ul. Kirpichnaya, 39-41
Moscow, 105187(SU)

(72) Erfinder: **RESHETIN, Evgeny Fedorovich**
5 ul. Sokolinoi gory, 19-96
Moscow, 105275(SU)

(74) Vertreter: **Patentanwälte Beetz sen. - Beetz jun. Timpe - Siegfried - Schmitt-Fumian-Mayr**
Steinsdorfstrasse 10
D-8000 München 22(DE)

(54) **GANZGEPRESSTER KOLLIMATOR.**

(57) Ganzgepreßter Kollimator, der einen hohen Wirkungsgrad und geringe axiale Abmessungen ohne Verwendung von Spiegelbeschichtungen gewährleistet, enthält einen Konvexrefraktor (1) und einen den Konvexrefraktor (1) umrandenden katadiptrischen Konkavreflektor (2), die miteinander optisch verbunden und auf einer gemeinsamen tragenden Schicht ausgeführt sind. Der Seitenteil des Refraktors (1) schließt eine Ringsammellinse (4) ein, die im Wege der aus dem Brennpunkt (F) zum Reflektor (2) kommenden Strahlen (13) liegt und dioptrische Fresnel-Ringe (5, 6) enthält, deren Anordnung die Herstellung des Kollimators nach dem direkten Strangverfahren in einem Arbeitsgang ermöglicht.

FIG. 1

# GANZGEPRESSTER KOLLIMATOR

## Technisches Gebiet

Die Erfindung bezieht sich auf die Lichttechnik, genauer auf einen ganzgepreßter Kollimator.

Am effektivsten kann die vorliegende Erfindung in den Lichtgeräten gerichteter Wirkung, die für die Massenproduktion bestimmt sind, beispielsweise in Kfz.--Leuchten und -Scheinwerfern, Verkehrsampeln, Scheinwerfern geringer Lichtleistung, tragbaren Laternen verschiedener Zweckbestimmung, darunter in den Taschenlampen, angewendet werden.

Das wichtigste Bauteil eines jeden Lichtgerätes, das zur Erzeugung einer gerichteten Strahlung bestimmt ist, ist der Kollimator, als welcher meist ein Konkavreflektor bzw. eine Sammellinse verwendet werden. Zur Anwendung kommt ferner ein gemischtes optisches Kollimatorsystem, das Brech- und Reflexionselemente enthält. In den für die Massenproduktion bestimmten Lichtgeräten, beispielsweise in den Laternen, ist das gemischte optische System in dem Fall besonders fertigungsgerecht, wenn es in Form eines einzigen ganzgepreßten Einzelteiles reproduziert werden kann.

Zu den Vorteilen eines Kollimators gehören: ein höher Wirkungsgrad, (gegenüber dem Durchmesser Austrittsöffnung relativ geringe axiale Abmessungen, niedriger Materialaufwand, Vermeidung der technologischen Operation der Aufbringung eines Spiegelbelags und bei ganzgepreßtem Kollimator - der einfache Preßvorgang (direktes Strangpressen in einem Arbeitsgang). Ein technisches Problem, das mit der Erweiterung der Lichtgeräteproduktion (z.B. für Kraftfahrzeuge) ist die Vereinigung dieser Vorteile in einem Gerät.

## Zugrundeliegender Stand der Technik

Bekannt ist ein monolithisches (ganzgepreßtes) optisches Bauteil aus transparentem Werkstoff (US-A Nr.

2 254 962), das Kollimatoreigenschaften aufweist und aus einer Sammellinse (Refraktor) und einem mit der Linse gleichachsigen katadioptrischen Ring (Reflektor) besteht, dessen Innenrand an den Außenrand der Linse anschließt und dieselbe umfaßt. Obwohl dieser Kollimator einen hohen Wirkungsgrad (einen großen Aufnahmewinkel der Lichtquelle) gewährleistet, besitzt er einen geringen Lichtöffnungsdurchmesser bei gemäßigtem Materialaufwand (oder aber einen großen Materialaufwand bei annehmbaren Querabmessungen), bedarf einer Miniaturlichtquelle (einer Lichtquelle geringer Leistung) und vermag es also nicht, einen starken Strom gerichteter Strahlung zu erzeugen.

Es sind bekannt ganzgepreßte Kollimatoren für Kfz.-Leuchten (US, A, Nr. 3883733, Fr, A, Nr. 2507741), die axialsymmetrische dioptrische und katadioptrische prismatische Elemente (Fresnel-Ringe) jeweils von Refraktor und Reflektor einschließen, die auf einer gemeinsamen tragenden Schicht aus einem transparenten Werkstoff ausgeführt sind. Bei gemäßigtem Materialaufwand besitzt ein derartiger Kollimator eine ausreichend große Lichtöffnung, aber in optischer Hinsicht wirken die Brech- und Reflexionselemente unabhängig, was bei einfachem Preßvorgang (US-A Nr. 3883733) keinen hohen Wirkungsgrad (der räumliche Aufnahmewinkel ist zu klein), bei einem hohen Wirkungsgrad aber (FR-A Nr. 2507741) keinen einfachen Preßvorgang gewährleistet.

Der angemeldeten Lösung am nächsten kommt nach seinem technischen Grundgehalt ein ganzgepreßter Kollimator, der in einem in US, A, Nr.4292664 beschriebenen Gerät verwendet ist. Dieser Kollimator enthält einen Konkavreflektor mit einer runden axialen Öffnung, von der ein Konvexrefraktor angeordnet ist. Der Vorderteil des Refraktors ist in Form einer scheibenförmigen Sammellinse ausgebildet, die sich vor der axialen Reflektoröffnung befindet, während der Seitenteil des Refraktors die Linse und den Reflektor zu einem monolithischen Einzelteil vereinigt und mit dem Reflektor optisch verbunden ist
(die Strahlen der Lichtquelle schneiden den Seitenteil
des Refraktors, bevor sie auf den Reflektor gelangen).
Die Möglichkeit eines direkten (entlang der Reflektorachse erfolgenden) Strangpressens des Kollimators in
einem Arbeitsgang, d. h. die Vermeidung von sonst vorhandenen negativen Gießwinkeln, ist dadurch gewährleistet, daß die Normale zu einem jeden Punkt der Kollimatorvorderfläche eine positive Projektion auf die Kollimatorsachse, zu einem jeden Punkt der Kollimatorrückfläche aber eine negative Projektion besitzt. Der Ausnutzungsgrad des von der Quelle kommenden Lichtstromes
in diesem Kollimator ist bei gemäßigten axialen Abmessungen desselben nicht hoch (was den Wirkungsgrad der
Geräte, in welchen er zur Anwendung gelangen kann, herabsetzt), weil ein beträchtlicher Teil des auf die
Seitenfläche des Refraktors einfallenden Lichtstromes
der Quelle auf den Reflektor nicht gelangt und unter
großen Winkeln zur Kollimatorachse austritt.

Offenbarung der Erfindung

Der vorliegenden Erfindung liegt die Aufgabe zugrunde,
einen ganzgepreßten Kollimator zu schaffen, bei dem der
Refraktions- und der Reflexionsteil in solcher Weise
miteinander optisch verbunden wären, daß eine Erhöhung
des Ausnutzungsgrades des von der Quelle kommenden Lichtstromes ohne Vergrößerung der axialen Kollimatorabmessungen unter Beibehandlung der Möglichkeit des direkten
Strangpressens in einem Arbeitsgang erzielt wäre.

Die gestellte Aufgabe wird dadurch gelöst, daß im
ganzgepreßten Kollimator, der einen Konkavreflektor mit
einer axialen Öffnung enthält, vor der sich ein Refraktor befindet, der vom Reflektor umfaßt und mit ihm optisch verbunden ist, wobei die Normale zur Vorderfläche
des Reflektors in einem jeden Punkt derselben eine positive Projektion auf die Kollimatorachse, zur Rückfläche aber eine negative Projektion besitzt, erfindungsgemäß zumindest ein Teil des Refraktors in Form einer Ringsammellinse ausgebildet ist, bei der die Kreissymmetrieachse mit der Kollimatorachse zusammenfällt, während die optische Achse ihres Profils, die durch den Brennpunkt des Kollimators geht, den Reflektor schneidet, wobei die Normale zur Außenfläche der Ringlinse in einem beliebigen Punkt derselben eine positive Projektion auf die Kollimatorachse, die Normale aber zur Innenfläche eine negative Projektion besitzt.

Die erfindungsgemäße Konstruktion des ganzgepreßten Kollimators gestattet es, seinen Wirkungsgrad ohne Vergrößerung der axialen Abmessungen durch Vergrößerung des äquivalenten räumlichen Aufnahmewinkels der Lichtquelle im Reflektor zu erhöhen, und zwar dank der Sammelwirkung der vorhandenen Ringlinse, ohne die Möglichkeit des direkten Strangpressens in einem Arbeitsgang auszuschließen.

In der vorzugsweisen Ausführungsform der Kollimatorkonstruktion ist ein Teil der Ringlinse in Form von dioptrischen Fresnel-Ringen ausgebildet, die sich auf der Seite des Reflektors an der Außenfläche der tragenden Linsenschicht, auf der Seite der Austrittsöffnung aber an der Innenfläche derselben befinden. Diese Konstruktion beeinträchtigt die Einfachheit des Preßvorgangs nicht und gestattet es, den Wirkungsgrad ohne Vergrößerung des Materialaufwandes des Kollimators zusätzlich zu erhöhen.

In einer weiteren Ausführungsform schließt der Kollimatorrefraktor eine der Ringlinse vorgelagerte, mit dem Kollimator konfokale scheibenförmige Sammellinse ein, deren Durchmesser dem Durchmesser des vorderen Randes der Ringlinse gleich ist, wobei der (zum Reflektor am nächsten liegende hintere Teil des Ringlinsenprofils konvexplan (die Konvexität ist dem Kollimatorbrennpunkt zugekehrt), der vordere Teil dieses Profils aber plankonvex ausgeführt ist, wobei die ebenen Profilabschnitte mit der Kollimatorachse einen Winkel von nicht über $1^o$ bilden. Diese Ausführung der Ringlinse erlaubt es (ohne die Möglichkeit des direkten Strangpressens anzutasten), mit Hilfe der scheibenförmigen Linse die blinde Öffnung im Reflektor nahezu vollständig zu überdecken, wodurch eine gleichmäßigere Lichtverteilung auf der Austritts-öffnungsfläche des Kollimators erreicht wird.

Denkbar ist eine Ausführungsform des ganzgepreßten Kollimators, nach welcher der vordere und hintere Teil der Ringlinse eine verschiedene optische Kraft besitzen. Die optische Kraft des vorderen Teiles ist größer als die des hinteren, wobei die Ausdehnung (entlang der Kollimatorachse) des vorderen Teiles des Ringlinsenprofils kleiner als die des hinteren Teiles ist. Diese Ausführung gestattet es, die Abmessungen des Reflektors und des Kollimators im ganzen bei einem vorgegebenen Aufnahmewinkel und einer Grenzdicke der Ringlinse zu optimieren.

Kurze Beschreibung der Zeichnungen

Weitere Ziele und Vorteile der vorliegenden Erfindung sind aus der nachfolgenden eingehenden Beschreibung ihrer Ausführungsbeispiele anhand von beigefügten, Zeichnungen begreifbar; in den Zeichnungen zeigt:

Fig. 1 den ganzgepreßten Kollimator gemäß der Erfindung;

Fig. 2 dtc., eine Ausführungsform;

Fig. 3 einen Schnitt nach Linie III-III von Fig. 2;

Fig. 4 einen Schnitt nach Linie IY-IY von Fig. 2.

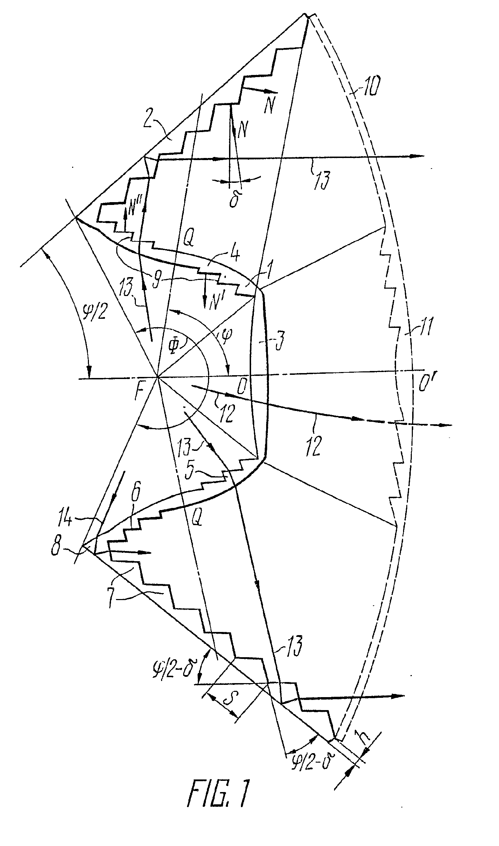

Der Kollimator von Fig. 1 stellt ein monolithisches ganzgepreßtes Bauteil aus transparentem Kunststoff bzw. einem Glas beliebiger Farbe dar, auf dessen gemeinsamer tragender Schicht gleichachsig (zur Achse OO') ein( in der Strahlungsrichtung) konvexer Refraktor 1 und ein denselben umrandender konkaver Reflektor 2 mit einem gemeinsamen Brennpunkt F auf der Achse OO' - der Anordnungsstelle einer Lichtquelle - ausgeführt sind. Der Refraktor 1 besitzt einen linearen Aufnahmewinkel $\varphi$

bis 260° und besteht aus Sammellinsen - einer scheibenförmigen Linse 3 und einer Ringlinse 4, bei welcher Ringlinse der vordere Rand mit dem Außendurchmesser der Linse 3, ihr hinterer Rand aber mit dem Innendurchmesser des Reflektors 2 zusammenfällt. Die optische Achse der Linse 3 und die Kreissymmetrieachse der Linse 4 fallen mit der Achse OO' zusammen. Die optische Achse FQ des Profils der Linse 4 geht durch den Brennpunkt F des Kollimators unter einem Winkel $\gamma$ zur Achse OO' in der Größenordnung von 60° - 100° und schneidet den Reflektor 2. Eine Verringerung des Materialaufwandes der Linse 4 bei einem hohen Aufnahmewinkel $\varphi$ ist durch die Anwendung von dioptrischen Fresnel-Ringen 5 und 6 vorn an der Innenfläche bzw. hinten an der Außenfläche der tragenden Linsenschicht erreicht. Der Reflektor 2 besteht aus prismatischen Ringen 7 mit Totalreflexion (aus katadioptrischen Fresnel-Ringen).

Die Linse 3 ist zur Verminderung der Divergrenz der aus dem Brennpunkt F kommenden Strahlen in bezug auf diese Achse bestimmt. Die Linse 4 ist zur Bündelung der auf dieselbe aus dem Brennpunkt F einfallenden Strahlung am Reflektor 2 bestimmt. Wenn der Abstand FQ (Q - optischer Mittelpunkt der Linse) der Brennweite der Linse 4 gleich ist (d. h. wenn die vom Brennpunkt F ausgehenden Strahlen nach deren Brechung durch die Linse 4 parallel zur kegeligen Nullablenkungsfläche sind, die durch die Rotation der Achse FQ um die Achse OO' entsteht), so besitzt die tragende Schicht des Reflektors 2 die Form der Seitenfläche eines abgeschnittenen Kegels mit einem Kegelwinkel $\gamma/2$. Katadioptrische Ringe 7 besitzen in ihrem Querschnitt die Form von gleichschenkligen Dreiecken, deren Grundlinie an die tragende Schicht anschließt, deren hintere Oberfläche die Totalreflexionsfläche für die Ringe 7 darstellt. Die Schenkel der Dreiecke bilden brechende Ein- und Austrittsflächen der Ringe 7 und schließen mit der Grundlinie einen Win-

kel $\varphi/2 - \delta$ ein, wo $\delta$ in den Grenzen liegt, die durch die folgende Beziehung festgelegt sind:

$$0 < tg\,\delta < \frac{\sqrt{n^2-1}\;\sin\frac{\varphi}{2} + \cos\varphi - \cos\frac{\varphi}{2}}{\sqrt{n^2-1}\;\cos\frac{\varphi}{2} - \sin\varphi - \sin\frac{\varphi}{2}} \quad , \quad (I)$$

worin n den Brechungsindex bedeutet.

Der linke Teil der Ungleichung /1/ ist durch technologische Erwägungen bestimmt: die formenden Teile des Preßwerkzeuges sollen keine negativen Abschrägungen besitzen, d. h. die Normale N zur Vorderfläche des Reflektors 2 muß in einem beliebigen Punkt derselben einen dem Vorzeichen nach gleiche, positive Projektion auf die Achse OO' (die Normale zur Rückfläche - eine negative Projektion) besitzen. Der rechte Teil der Ungleichung (1) stellt die Folge der gestellten Forderung dar, daß der Einfallswinkel der Strahlen auf die reflektierende Fläche der Ringe 7 größer als der Totalreflexionswinkel sei. Zur Herabsetzung der Strahlungsverluste an den Stoßstellen der Ringe 7 ist bei $\varphi < 90^\circ$ ein folgender Wert der Dicke h der tragenden Schicht empfohlen:

$$h = \frac{S}{4\,tg\,\gamma}\left[1 - tg\,\gamma \cdot tg\left(\frac{\varphi}{2} - \delta\right)\right] , \quad (2)$$

wo $\gamma = \varphi/2 - \delta + arcsin\frac{\cos(\varphi - \delta)}{n}$ ,

den Einfallswinkel der Strahlen an der reflektierenden Fläche der Ringe 7, S - die Breite der Ringe 7 bedeutet. Bei $\delta \longrightarrow 0$ und Einhaltung der Beziehung /2/ sind die Lichtverluste zwischen den benachbarten Ringen 7 vollkommen ausgeschlossen. Bei $\varphi \longrightarrow 90^\circ$ ( und $\delta \longrightarrow 0$ ) sind die Verluste für eine beliebige Dicke R der tragenden Schicht ausgeschlossen. Bei $\varphi > 90^\circ$ können die Verluste nicht ganz ausgeschlossen werden, sie nehmen vielmehr mit dem wachsenden $\varphi$ zu und hängen von h nicht ab.

Die Dicke der tragenden Schicht des Refraktors 1 ist ebenfalls mit den Abmessungen der dioptrischen Fresnel-Ringe 5, 6 optisch nicht verbunden und wird lediglich unter Berücksichtigung der Festigkeits- und Lichtfiltrationseigenschaften des farbigen Kollimatorwerkstoffs gewählt.

Um Störungen des direkten Strangpressens seitens der Verbindungsflächen 9 der dioptrischen Ringe 5, 6 zu vermeiden , sind die Ringe 5 des (in bezug auf die Achse FQ) vorderen Teiles der Ringlinse 4 an der Innenseite, die Ringe 6 des hinteren Teiles aber an der Außenseite der tragenden Schicht der Linse 4 ausgeführt. Hierbei wechselt die meridionale Krümmung der tragenden Schicht im Mittelpunkt Q der Linse 4 ihr Vorzeichen, derart, daß das Profil des vorderen Teiles der Linse 4 dem Brennpunkt F mit seiner Konkavität, das Profil des hinteren Teiles aber mit seiner Konvexität zugekehrt ist. Die Normalen N′ und N′′ zu den Brechflächen der Ringe 5 und 6 bilden mit der Achse FQ einen Winkel kleiner als $(90^\circ -\varphi)$. Dadurch wird die vom Standpunkt des Preßvorgangs entlang der Achse OO′ aus erforderliche Richtung der Projektionen dieser Normalen auf die Achse OO′ gewährleistet, und zwar eine positive für die Normalen zur Außenfläche der Linse 4 und eine negative für die Normalen zur Innenfläche derselben. Dasselbe gilt für den mittleren Teil des Profils der Linse 4, was also bedeutet, daß zumindest bei $\varphi \geqslant 90^\circ$ die Achse FQ die Linse 4 nicht normal zur Oberfläche derselben (wie dies meistens der Fall ist), sondern unter einem Winkel zur Normalen von mehr als $/\varphi -90^\circ/$ schneiden soll.

An der Verbindungsstelle des Reflektors 2 mit dem Refraktor 1 kann ein katadioptrischer Ring 8 ausgeführt sein, dessen Profil vom Profil der Ringe 7 verschieden ist, weil er für die Umformung der vom Refraktor 1 nicht erfaßten Strahlen bestimmt ist.

In der Regel wird der beschriebene Kollimator in einer Leuchte hinter einem Schutzglas bzw. einem Steuer 10 angeordnet. Der zentrale Teil des letzteren kann in Form einer Sammellinse 11 ausgebildet sein, die die Linse 3 bis zum Kollimator mit der Austrittsöffnung ergänzt, welche die axiale Blindöffnung des Reflektors 2 vollständig überdeckt. Die Linse 3 kann überhaupt fehlen bzw. eine optische Kraft gleich Null haben und die Funktion eines Lichtfilters für die auf die Linse 11 einfallenden Strahlen erfüllen.

Der Lichtstrom von der in einem Punkt F angebrachten Quelle wird in zwei Teile unterteilt. Der eine Teil besteht aus Strahlen 12, die die Linse 3 beleuchten und von ihr (unter Beteiligung der zusätzlichen Linse 11) in eine zur Achse OO' parallele gerichtete Strahlung umgewandelt werden. Der zweite Teil - der Hauptteil - des Lichtstromes besteht aus Strahlen 13, die die Ringlinse 3 beleuchten, welche sie unter einem Winkel $\varphi$ zur Achse OO' leitet, und die von derselben in eine entlang der Achse OO' mittels des Reflektors 2 gerichtete Strahlung umgewandelt werden. Ein kleiner Strom von Strahlen 14 fällt unmittelbar auf das katadioptrische Element 8 des Reflektors 2 ein, ohne vom Refraktor 1 umgewandelt zu werden.

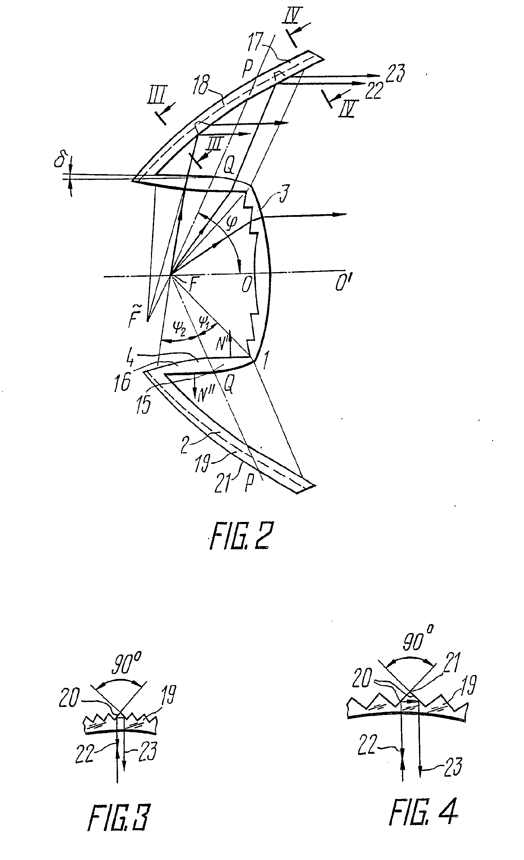

Der Kollimator von Fig. 2 unterscheidet sich vom Kollimator gemäß Fig. 1 durch ein einfacheres, glattes Profil der Ringlinse 4 und eine kompliziertere Struktur des Reflektors 2. Der vordere Teil 15 der Linse 4 (vor der optischen Achse FQ) besitzt ein plankonvexes, der hintere Teil 16 derselben aber ein konvexplanes Profil (mit seiner Konvexität dem Brennpunkt F zugekehrt), wobei die ebenen Profilabschnitte zur Achse OO' des Kollimators (und der Preßachse) nahezu parallel liegen, nämlich mit einer geringen Abweichung von der Parallelität um einen kleinen Gießwinkel $\delta$ in der Größenordnung von 30' - 60', der das (für das direkte Strangpressen) erforderliche Vorzeichen der Projektionen der Normalen N' und N" zur Innen- und Außenfläche der Linse 4 auf die Achse OO', und zwar jeweils ein negatives une ein positives, gewährleistet. Eine derartige Linse 4 überdeckt die axiale Blindöffnung im Reflektor 2 lediglich um einen geringen Betrag in der Größenordnung der Dicke der Linse 4, was es erlaubt, ohne die Möglichkeit des direkten Strangpressens zu beeinträchtigen, den Dunkelfleck in der Lichtöffnung des Kollimators fast vollständig auszuschließen, indem man die Blindöffnung des Reflektors 2 mit Hilfe einer mit dem Kollimator konfokalen scheibenförmigen Sammellinse 3 überdeckt, deren Durchmesser dem Durchmesser des vorderen Randes der Linse 4 gleich ist.

Da die dioptrischen Fresnel-Ringe 5, 6 hier nicht vorhanden sind, kann man die weitwinklige Ringlinse 4 als ganz konfokal mit dem Kollimator nicht ausgeführten, d. h., ihre optische Kraft reicht nicht aus, um den mit ihr optisch verbundenen Reflektor 2 auf einer einfachen kegeligen Tragschicht mit geringen axialen Abmessungen ausführen zu können. Zugleich lassen sich diese Abmessungen relativ verringern, wenn die größte brechende Wirkung im vorderen Teil 15 der Linse 4 aufgrund der Verkleinerung der optischen Kraft ihres hinteren Teiles 16 konzentriert wird.

Wenn der Aperturwinkel $\psi_1$ des vorderen Teiles 15 der Linse 4 15 - 20° nicht übersteigt, kann dieser Teil mit dem Kollimator konfokal sein, während der mit ihm optisch verbundene Vorderteil 17 des Reflektors 2 kegelig ausgebildet ist. Die Achse FQ bildet mit der Achse OO′ einen Winkel $\psi$ = 60 - 70°. Der Aperturwinkel $\psi_2$ der hinteren Teiles 16 der Linse 4 beträgt 30 - 60°, und ihre optische Kraft ist (bei einem dem Teil 15 gleichen Dickengefälle im Abschnitt vom Nullbrechungspunkt Q zum Linsenrand hin sehr gering, während der hintere Teil 18 des Reflektors 2 ein Konkavprofil besitzt, das mit dem Teil 17 in einem Punkt P, in dem die Achse FQ den Reflektor 2 schneidet, verbunden ist, und zwar beispielsweise ein parabolisches Profil mit einem Brennpunkt an der Stelle F der imaginären Abbildung des Punktes F, die vom hinteren Teil 16 der Linse 4 erzeugt wird.

Der Reflektor 2 des Kollimators von Fig. 2 weist an der Rückseite der tragenden Schicht radial orientierte katadioptrische Prismenelemente 19 auf, deren Form in verschiedenen Querschnitten in Fig. 3, 4 wiedergegeben ist. Reflektierende Flächen 20 eines jeden Prismas 19 bilden in jedem zu ihrer Schnittrippe 21 senkrechten Querschnitt einen rechten Total - reflexions - flächenwinkel, dessen lineare Maße dem Abstand von der Achse OO′ proportional sind. Die Rippe 21 ist der Vorderfläche der tragenden Schicht parallel, welche Vorderfläche die Funktionen einer brechenden Ein- und Austrittsfläche eines jeden Prismas 19 in sich vereinigt. Ein derartiger Reflektor 2 zeichnet sich vorteilhaft durch fehlende Verluste für Fresnelsche Reflexion aus, weil die vom der Vorderfläche des Reflektors 2 reflektierten Strahlen 22 nach der Richtung mit den Strahlen 23 zusammenfallen, die von den Flächen 20 eines jeden Prismas 19 reflektiert worden sind, wobei sie dank dem vorhandenen Lichtfilter, als welches die Linse 4 dient, eine mit ihnen gemeinsame Färbung haben.

Die Vorderfläche des Kollimators von Fig. 2 ist glatt, was den Betrieb desselben ohne ein Schutzglas ermöglicht.

In den beiden Ausführungsformen des ganzgepreßten Kollimators (Fig. 1, 2) braucht der Reflektor 2 keine Spiegelbeschichtung, und zwar dank den angewendeten katadioptrischen Reflexionselementen 7 (Fig. 1) bzw. 19 (Fig. 2 - 4) in Form von Prismen mit Totalreflexion.

Die ringförmigen katadioptrischen Elemente 7 (Fig. 1) sind hinsichtlich der Preßwerkzeugherstellung fertigungsgerechter, aber die radialen Prismen 19 (Fig. 2 - 4) gewährleisten ein höheres Reflexionsvermögen sowie eine glatte Vorderseite des Reflektors 2.

Möglich ist die Herstellung des Kollimators nach dem Zweifarbengießverfahren. Der konvexe Teil des Kollimators, der aus Sammellinsen 3, 4 und einem katadioptrischen Ring 8 besteht, der mit dem Refraktor 1 (Fig. 1) optisch nicht verbunden ist, wird aus einem farbigen Werkstoff gefertigt und vereinigt die Funktionen eines die Farbe des Lichtsignals bestimmenden Lichtfilters in sich. Der konkave Teil des Kollimators, oder genauer der Reflektor 2 (mit Ausnahme des Ringes 8), wird aus einem farblosen Material ausgeführt, wodurch die Lichtabsorption im Körper des katadioptrischen Reflektors 2 unter Beibehaltung der Signalfarbe vermindert wird.

Gewerbliche Verwertbarkeit

Die Erfindung kann in Lichtgeräten angewendet werden, die für die Massenproduktion bestimmt sind, beispielsweise in Kfz.-Leuchten und -Scheinwerfern, Verkehrsampeln, Scheinwerfern geringer Lichtleistung sowie in tragbaren Laternen verschiedener Zweckbestimmung.

PATENTANSPRÜCHE

1. Ganzgepreßter Kollimator, der einen Konkavreflektor (2) mit einer axialen Öffnung enthält, vor der sich ein Refraktor (1) befindet, der vom Reflektor (2) umfaßt und mit ihm optisch verbunden ist, wobei die Normale (N) zur Vorderfläche des Reflektors (2) in einem jeden Punkt derselben eine positive Projektion auf die Kollimatorachse, zur Rückfläche aber eine negative Projektion besitzt, dadurch g e k e n n z e i c h n e t, daß zumindest ein Teil des Refraktors (1) in Form einer Ringsammellinse (4) ausgebildet ist, deren Kreissymmetriachse mit der Achse /OO'/ des Kollimators zusammenfällt, während die optische Achse /FQ/ ihres Profils, die durch den Brennpunkt (F) des Kollimators geht, den Reflektor (2) schneidet, wobei die Normale (N'') zur Außenfläche der Ringlinse (4) in einem jeden Punkt derselben eine positive Projektion auf die Achse (OO'') des Kollimators, die Normale (N') aber zur Innenfläche derselben eine negative Projektion besitzt.

2. Ganzgepreßter Kollimator nach Anspruch 1, dadurch g e k e n n z e i c h n e t, daß ein Teil der Ringlinse (4) in Form von dioptrischen Fresnel-Ringen (5, 6) ausgebildet ist, die sich auf der Seite des Reflektors (2) an der Außenfläche der Tragschicht der Linse (4), auf der Seite des Austrittsöffnung des Kollimators aber an der Innenfläche derselben befinden.

3. Ganzgepreßter Kollimator nach Anspruch 1, dadurch g e k e n n z e i c h n e t, daß der Refraktor (1) eine der Ringlinse (4) vorgelagerte, mit dem Kollimator konfokale scheibenförmige Sammellinse (3) einschließt, deren Durchmesser dem Durchmesser des vorderen Randes der Ringlinse (4) gleich ist, wobei der hintere Teil (16) des Profils der Ringlinse (4) konvexplan, der vordere Teil (15) aber plankonvex ausgeführt ist, wobei die ebenen Profilabschnitte mit der Achse (OO) des Kollimators einen Winkel ( $\delta$ ) von nicht über $1^\circ$ bilden.

4. Ganzgepreßter Kollimator nach Ansprüchen 1, 3, dadurch g e k e n n z e i c h n e t, daß der vordere Teil (15) der Ringlinse (4) eine größere optische Kraft und eine geringere Ausdehnung entlang der Achse (OO') des Kollimators als der hintere Teil ( 16) besitzt.

FIG. 1

FIG. 2

FIG. 3

FIG. 4

# INTERNATIONAL SEARCH REPORT

International Application No PCT/SU 88/00030

## I. CLASSIFICATION OF SUBJECT MATTER (if several classification symbols apply, indicate all) *

According to International Patent Classification (IPC) or to both National Classification and IPC

Int.Cl.$^4$: G 02 B 27/30, F 21 V 5/00

## II. FIELDS SEARCHED

| Minimum Documentation Searched [7] | |
|---|---|
| Classification System | Classification Symbols |
| Int.Cl.$^4$: | G 02 B 3/08, 27/00, 27/30 F 21 V 5/00 |

Documentation Searched other than Minimum Documentation
to the Extent that such Documents are Included In the Fields Searched *

## III. DOCUMENTS CONSIDERED TO BE RELEVANT *

| Category * | Citation of Document, [11] with indication, where appropriate, of the relevant passages [12] | Relevant to Claim No. [13] |
|---|---|---|
| A | US, A, 2224178, (Ralph E. Bitner), 10 December 1940, see figure 1 | 1 |
| A | US, A, 3883733, (John Voevodsky), 13 May 1975, see figures 2,3 (cited in the description) | 1 |
| A | CH, B5, 485236, (VEB Carl Zeiss JENA), 13 March 1970, see figures 4,5 & US, A, 3523721 | 1,4 |
| A | GB, A, 2065858, (Rollei-Werke Franke et al.), 1 July 1981, see figure 3 | 1-4 |
| A | GB, A, 1209377, (IGNACIO GOYTISOLO TALTAVULL), 21 October 1970, see figure 5 | 1-4 |
| A | SU, A1, 1282051, (Latviisky gosudarstvenny universitet im. P. Stuchki), 7 January 1987, see the drawing | 1-4 |

---

* Special categories of cited documents: [10]

"A" document defining the general state of the art which is not considered to be of particular relevance

"E" earlier document but published on or after the international filing date

"L" document which may throw doubts on priority claim(s) or which is cited to establish the publication date of another citation or other special reason (as specified)

"O" document referring to an oral disclosure, use, exhibition or other means

"P" document published prior to the international filing date but later than the priority date claimed

"T" later document published after the international filing date or priority date and not in conflict with the application but cited to understand the principle or theory underlying the invention

"X" document of particular relevance; the claimed invention cannot be considered novel or cannot be considered to involve an inventive step

"Y" document of particular relevance; the claimed invention cannot be considered to involve an inventive step when the document is combined with one or more other such documents, such combination being obvious to a person skilled in the art.

"&" document member of the same patent family

## IV. CERTIFICATION

| Date of the Actual Completion of the International Search | Date of Mailing of this International Search Report |
|---|---|
| 20 September 1988 (20.09.88) | 5 October 1988 (05.10.88) |
| International Searching Authority | Signature of Authorized Officer |
| ISA/SU | |

Form PCT/ISA/210 (second sheet) (January 1985)